# EUROPÄISCHE PATENTANMELDUNG

(11) **EP 1 549 045 A1**
(43) Veröffentlichungstag der Anmeldung: **29.06.2005**
(21) Anmeldenummer: 05101414.0
(22) Anmeldetag: 22.02.2003
(51) Int. Cl.: H04N 1/60

(54) **Verfahren zur Korrektur der Bilddaten eines Kamerasystems**

(30) Priorität: 26.02.2002 DE 10208285
(62) Teilanmeldung aus: 03717106.3
(71) Anmelder: Koenig & Bauer Aktiengesellschaft, 97080 Würzburg (DE)
(72) Erfinder: Lohweg, Volker, 33699, Bielefeld (DE); Willeke, Harald, 33102, Paderborn (DE)

(57) **Zusammenfassung**

Die Erfindung betrifft ein Verfahren zur Korrektur der Bilddaten eines, insbesondere zur Inspektion von farbigen Druckerzeugnissen geeigneten, Kamerasystems mit einer Farbkamera, die entsprechend der aufgenommen Farben drei Ausgangssignale für drei getrennte Farbkanäle in der Form von Ausgangssignalvektoren liefert, wobei die Ausgangssignalvektoren, deren Koeffizienten die von der Farbkamera gelieferten Ausgangssignale für die drei Farbkanäle an einer bestimmten Position im Beobachtungsbereich repräsentieren, mit einer, insbesondere quadratischen, Korrekturmatrix multipliziert werden, wobei die Ausgangssignalvektoren zusätzlich zur Korrektur mit der Korrekturmatrix in einem weiteren Korrekturschritt zur Anpassung der Farbbalance, der Helligkeit und des Kontrastes verändert werden und die Koeffizienten des Korrekturvektors und die drei farbkanalabhängigen Korrekturfaktoren experimentell dadurch ermittelt werden, dass eine Referenzfarbtafel vorgegeben wird, auf der in mehren Farbfeldern unterschiedliche Referenzfarben dargestellt sind, für jedes Farbfeld der Referenzfarbtafel ein Sollvektor vorgegeben wird, der entsprechend der jeweiligen Referenzfarbe geeignete Sollausgangssignale für die drei Farbkanäle repräsentiert, die Referenzfarbtafel mit der Farbkamera aufgenommen wird, wobei für jedes Farbfeld ein Ausgangssignalvektor ermittelt wird, der Korrekturvektor und die drei Korrekturfaktoren derart gewählt werden, dass die korrigierten Ausgangssignalvektoren für die beiden Farbfelder mit den Referenzgrauwerte Schwarz und Weiß, die durch entsprechende Addition mit dem Korrekturvektor und Multiplikation mit den farbkanalabhängigen Korrekturfaktoren erhaltenen werden, im wesentlichen exakt den für diese beiden Farbfelder vorgegebenen Sollvektoren übereinstimmen.

## Beschreibung

Die Erfindung betrifft ein Verfahren zur Korrektur der Bilddaten eines Kamerasystems gemäß dem Oberbegriff des Anspruchs 1.

Insbesondere in der Druckindustrie finden Kamerasysteme für unterschiedliche Anwendungen immer weitere Verbreitung. Beispielsweise können derartige Kamerasysteme als Registermesssysteme, Inspektionssysteme oder Bahnbeobachtungssysteme Verwendung finden. Als Farbkamera werden dabei vielfach digitale CCD-Kameras eingesetzt, deren lichtempfindliche Pixel entsprechend der aufgenommenen Farbe im Beobachtungsbereich drei Ausgangssignale für drei getrennte Farbkanäle, zumeist für die Farben rot, grün und blau, liefern.

Ein Problem der bekannten Kamerasysteme bei der Inspektion von farbigen Druckerzeugnissen ist es, dass die von den Farbkameras gelieferten Bilddaten häufig nicht dem Farbempfinden des menschlichen Auges entsprechen. Unbearbeitete Bilddaten dieser Farbkameras sind hinsichtlich Farbbalance, Helligkeit, Kontrast und Farbtonwiedergabe unzureichend im Hinblick auf die Farbabstimmung, die dem menschlichen Farbempfinden entspricht. Neben den Unzulänglichkeiten von Objektiven und Beleuchtungseinrichtungen ist die spektrale Empfindlichkeitsverteilung der eingesetzten Farbkameras Hauptgrund für dieses Problem. Die Empfindlichkeitsverteilung der eingesetzten Farbkameras stimmt nicht mit der Empfindlichkeitsverteilung des menschlichen Auges überein, was dazu führt, dass die von den Farbkameras gelieferten Bilddaten bei der nachgeordneten Weiterbearbeitung, beispielsweise der Anzeige an einem Monitor, zu einem verfälschten Seheindruck führen.

Aus der US 5 189 511 A ist ein Verfahren zur Korrektur von Bilddaten mittels einer Korrekturmatrix bekannt.

Die US 4 930 009 A, die US 5 331 441 A und die US 6 278 533 B1 offenbaren Verfahren zur Korrektur von Bilddaten eines Kamerasystems mit einer Farbkamera unter Verwendung einer Korrekturmatrix.

Der Erfindung liegt die Aufgabe zugrunde, ein Verfahren zur Korrektur der Bilddaten eines Kamerasystems zu schaffen.

Die Aufgabe wird erfindungsgemäß durch die Merkmale des Anspruchs 1 gelöst.

Voraussetzung für eine empfindungsgemäße Bearbeitung der Bilddaten des Kamerasystems ist es, dass möglichst viele von der Farbkamera erfassten Farben hinsichtlich Farbton, Sättigung und Helligkeit ausreichend genau in einem Farbraum eingeordnet werden, der dem Farbempfinden des menschlichen Auges entspricht. Besonders geeignet ist dabei der sogenannte CIELAB-Farbraum, der in der Drucktechnik weite Verbreitung gefunden hat. Eine Maßzahl für die Genauigkeit von empfindungsgemäßen Farbdifferenzen ist im CIELAB-Farbraum durch den geometrischen Abstand der Soll- und Istwerte von L, A und B (ΔE) gegeben.

Ein mit der Erfindung erzielbarer Vorteil besteht insbesondere darin, dass durch die Multiplikation der Ausgangssignalvektoren mit einer insbesondere quadratischen Korrekturmatrix die Bilddaten in einfacher Weise derart verändert werden können, dass sie dem Farbempfinden des menschlichen Auges angenähert werden. Insbesondere gelingt durch diese Multiplikation mit einer Korrekturmatrix zum einen eine relativ genau Einordnung aller Druckfarben in einem grundsätzlich beliebigen Farbraum. Außerdem ist die Umrechnung durch Multiplikation mit der Korrekturmatrix datentechnisch so einfach zu realisieren, dass auch bei großen Mengen von Bilddaten eine Implementierung in reale System möglich ist.

Von entscheidender Bedeutung für die Qualität der erfindungsgemäßen Korrektur der Bilddaten sind selbstverständlich die Koeffizienten der Korrekturmatrix, da je nach Wahl dieser Koeffizienten die Ausgangssignalvektoren in unterschiedlicher Weise transformiert werden. Die Koeffizienten der Korrekturmatrix können beispielsweise aus Erfahrungswerten ermittelt und dann fest eingespeichert werden. Um die Koeffizienten der Korrekturmatrix variabel an unterschiedliche Randbedingungen, beispielsweise hinsichtlich der verwendeten Farbkamera, der Beleuchtungsverhältnisse oder der verwendeten Optiken anpassen zu können, wird ein iterativer Näherungsalgorithmus vorgeschlagen. Zur Durchführung dieses Näherungsalgorithmuses muss eine Referenzfarbtafel, beispielsweise ein IT8-Chart mit 288 Farbfeldern, vorgegeben werden. In den Farbfeldern sind die unterschiedlichen Referenzfarben dargestellt. Außerdem ist die Einordnung der verschiedenen Referenzfarben in einem geeigneten Farbraum, beispielsweise dem CIELAB-Farbraum bekannt. Durch bekannte Transformationen lassen sich aus diesen vorgegebenen CIELAB-Werten für die verschiedenen Referenzfarben der Referenzfarbtafel entsprechende Sollausgangssignale für die drei Farbkanäle berechnen. Im Ergebnis wird also für den Näherungsalgorithmus eine Referenzfarbtafel als Eingangsgröße und für jede Referenzfarbe ein Sollvektor für die drei Farbkanäle als gewünschtes Ergebnis der Umrechnung vorgegeben. Bei der Durchführung des Näherungsalgorithmus zur Bestimmung der Koeffizienten der Korrektormatrix wird nun die Referenzfarbtafel mit der Farbkamera aufgenommen und für jedes Farbfeld der Ausgangssignalvektor der Farbkamera ermittelt. Die Differenz zwischen diesen Ausgangssignalvektoren der Farbkamera und den vorgegebenen Sollvektoren entspricht der Differenz zwischen dem Farbempfinden des menschlichen Auges und der Empfindlichkeitsverteilung der Farbkamera.

Ein weiterer Vorteil dieses Verfahrens stellt die Berechnung der Farbkorrekturwerte bei verschiedenen Beleuchtungsquellen und Änderungen derselben dar. In der Drucktechnik wird z. Zt. noch das Normlicht D50 verwendet. Durch Vorgabe des Weißpunktes D50 ist es möglich, die Rec. 709 durch eine Umrechnung auf das D50-Normlicht anzupassen, so dass die Intensitäten der nichtlinearen R',G',B'- Werte sich verhalten, als wenn das zu untersuchende Objekt mit einer D50-Beleuchtung angestrahlt worden sei. Durch ein messtechnisches Verfahren, dass iterativ die Werte des R',G',B'- Farbraums an den CIELAB-Farbraum anpasst, ist es möglich, die Farbräume aneinander anzupassen, ohne das eine reale Normbeleuchtung notwendig ist. Dieses Verfahren hat den Vorteil, dass bei einer zu erwartenden Änderung der Normlichtvorgabe sofort eine Anpassung vorgenommen werden kann.

Ausgangspunkt der Iteration ist eine Korrekturmatrix, deren Koeffizienten als Ausgangswerte vorgegeben sind. Diese Ausgangswerte können entweder rein zufällig oder entsprechend bestimmten Erfahrungswerten gewählt sein. Im ersten Iterationsschritt wird nun diese Korrekturmatrix mit allen Ausgangssignalvektoren multipliziert und die dadurch erhaltenen korrigierten Ausgangssignalvektoren zwischengespeichert. Anschließend werden die Koeffizienten der Korrekturmatrix leicht verändert und die Multiplikation erneut durchgeführt. Die Änderung der Koeffizienten der Korrekturmatrix wird dabei jeweils nur dann angenommen, wenn die korrigierten Ausgangssignalvektoren sich an die vorgegebenen Sollvektoren annähern.

Die Annäherung der korrigierten Ausgangssignalvektoren an die vorgegebenen Sollvektoren muss für jeden Iterationsschritt bewertet werden, um anhand dieser Bewertung entscheiden zu können, ob die in diesem Iterationsschritt vorgenommene Änderung der Koeffizienten der Korrekturmatrix übernommen werden oder verworfen werden soll. Ein besonders geeignetes Bewertungsverfahren stellt es dabei dar, wenn für jedes Farbfeld der Referenzfarbtafel der Differenzwert zwischen korrigiertem Ausgangssignalwert und dem für dieses Farbfeld vorgegebenen Sollvektor ermittelt und die Summe aller dieser Differenzwerte aufaddiert wird. Die Änderung der Korrekturkoeffizienten der Korrekturmatrix im letzten Iterationsschritt wird dann nur für den Fall angenommen, dass die Summe aller Differenzwerte im letzten Iterationsschritt im Vergleich zur Summe aller Differenzwerte im vorletzten Iterationsschritt kleiner geworden ist. Ist dagegen die Summe aller Differenzwerte durch die Änderung der Koeffizienten der Korrekturmatrix im letzten Iterationsschritt größer geworden, wird die Änderung der Koeffizienten verworfen. Durch diese summarische Betrachtung der Differenzwerte über alle Referenzfarben ist es durchaus möglich, dass sich die Differenz für einzelne Referenzfarben während eines Iterationsschrittes vergrößert. Insgesamt wird jedoch zuverlässig die Minimierung der Differenzwerte über alle Farbkanäle hinweg gesichert.

Ein weiteres Problem bestehender Kamerasysteme ist die richtige Einstellung der Farbbalance, d. h. der richtigen Gewichtung der drei Farbkanäle zueinander. Um die Farbbalance der einzelnen Farbkanäle relativ zueinander einstellen zu können, kann zu jedem Ausgangssignalvektor ein Korrekturvektor hinzuaddiert und zugleich die Koeffizienten jedes Ausgangssignalvektors mit drei farbkanalabhängigen Korrekturfaktoren multipliziert werden. Diese Korrektur der drei Farbkanäle jedes Ausgangssignalvektors entspricht einer linearen Abbildung der einzelnen Koeffizienten der Ausgangssignalvektoren.

Eine besonders gute Farbbalance wird erreicht, wenn der Korrekturvektor und die drei farbkanalabhängigen Korrekturfaktoren derart gewählt werden, dass sie durch Anwendung der Korrektur mit dem Korrekturvektor und den drei Korrekturfaktoren erhaltenen korrigierten Ausgangssignalvektoren für die beiden Felder mit den Referenzgrauwerten Schwarz und Weiß im Wesentlichen exakt den für diese beiden Farbfeldern vorgegebenen Sollvektoren entsprechen. D. h. mit anderen Worten, die lineare Abbildung der Ausgangssignalvektoren wird so gewählt, dass sich für die beiden Referenzgrauwerte Schwarz und Weiß korrigierte Ergebnisse ergeben, die dem Kontrastempfinden des menschlichen Auges entsprechen. Diese lineare Abbildung wird auf alle Ausgangssignalvektoren angewendet, wodurch Helligkeit und Kontrast im gesamten Farbspektrum automatisch mitkorrigiert werden.

Zur Durchführung des erfindungsgemäßen Verfahrens sind besonders CCD-Farbkameras mit einer Vielzahl von flächig oder zeilenförmig angeordneten Pixel geeignet. Diese CCD-Farbkameras weisen ebenfalls drei Farbkanäle auf und liefern als Bilddaten pixelweise Ausgangssignalvektoren, deren Koeffizienten jeweils die drei Ausgangssignale für die drei Farbkanäle (rot, grün, blau) repräsentieren. Ist die CCD-Farbkamera beispielsweise mit 1 Million Pixel versehen, entspricht dies für jedes Bild einer Bilddatenmenge von 1 Million Ausgangssignalvektoren mit jeweils drei Koeffizienten.

Bei der Verwendung von CCD-Farbkameras kann es zu Farbverfälschungen und einem Abfall der Intensität insbesondere an den Rändern der Kamerabilder kommen. Diese Verfälschungen werden von den verwendeten Objekten erzeugt. Zur Korrektur dieses Intensitätsabfalls kann eine sogenannte Shading-Korrektur eingesetzt werden. Dazu werden für jeden Pixel drei farbkanalabhängige Korrekturfaktoren vorgegeben. Durch Multiplikation dieser pixelabhängigen Korrekturfaktoren mit den Koeffizienten der Ausgangssignalvektoren können die pixelspezifischen Farbverfälschungen bzw. ein bauartbedingter Intensitätsabfall in den unterschiedlichen Bereichen des CCD-Chips ausgeglichen werden.

Diese pixelspezifischen, farbkanalabhängigen Korrekturfaktoren können beispielsweise in einfacher Weise experimentell dadurch ermittelt werden, dass der Beobachtungsbereich der CCD-Farbkamera mit einem homogen Material, insbesondere homogenen weißem Material, ausgelegt und durch Auslösung der Kamera für jeden Pixel ein Ausgangssignalvektor ermittelt wird. Aus all diesen Ausgangssignalvektoren wird dann der Ausgangssignalvektor herausgefiltert, der die höchsten Koeffizienten aufweist und somit die hellste Stelle im Beobachtungsbereich repräsentiert. Da der Beobachtungsbereich aber mit einem homogen farbigen Material ausgelegt ist, müssten alle Pixel im Wesentlichen identisch miteinander übereinstimmende Ausgangssignalvektoren liefern. Die jeweiligen Differenzen beruhen also auf Farbverfälschungen oder einem bauartbedingten Intensitätsabfall. Um dies auszugleichen, werden nun für jeden Farbkanal jedes einzelnen Pixels Korrekturfaktoren gewählt, die dafür sorgen, dass bei Aufnahme des homogen farbigen Materials alle Ausgangssignalvektoren dem Ausgangssignalvektor an der hellsten Stelle im Beobachtungsbereich entsprechen.

Insbesondere Farbverfälschungen hängen stark von den Beleuchtungsverhältnissen im Beobachtungsbereich ab. Um Fehlerquellen durch Wechsel der Beleuchtungsverhältnisse auszuschließen, sollte deshalb die Beleuchtung bei der experimentellen Bestimmung der pixelspezifischen farbkanalabhängigen Korrekturfaktoren der Beleuchtung während des späteren Einsatzes des Kamerasystems entsprechen.

Bei vielen Anwendungsfällen des erfindungsgemäßen Verfahrens werden die korrigierten Ausgangssignalvektoren, die durch Korrektur der Ausgangssignalvektoren der Farbkamera erhalten werden, zur Ansteuerung der drei getrennten Farbkanäle eines Farbbildmonitors eingesetzt. Die Darstellung der Farben an einem Farbbildmonitor wirft dabei ebenfalls das Problem auf, dass die Darstellungscharakteristik der meisten Farbbildmonitoren nicht dem Farbempfinden des menschlichen Auges entspricht. Dies beruht insbesondere darauf, dass das Helligkeitsverhalten von Monitoren in der Regel nicht linear ist, d.h. die Intensität des Lichtes, das auf dem Schirm reproduziert wird, ist eine nichtlineare Funktion der elektrischen Eingangssignale. Dies bedeutet mit anderen Worten, dass für den Fall, dass die erfindungsgemäß entsprechend dem Farbempfinden des menschlichen Auges korrigierten Ausgangssignalvektoren einfach an den Farbbildmonitor übertragen und dort ohne Berücksichtigung der Nichtlinearität des Helligkeitsverhaltens angezeigt werden, unerwünschte Verfälschungen im Farbbild auf dem Bildschirm auftreten.

Um derartige Farbverfälschungen bei der Anzeige an einem Farbbildmonitor zu verhindern, können die Koeffizienten des korrigierten Ausgangssignalvektors als Basis jeweils mit einem Faktor γ in die Potenz gesetzt werden. Durch diese nichtlineare Umrechnung der Koeffizienten der korrigierten Ausgangssignalvektoren kann die Nichtlinearität des Helligkeitsverhaltens der meisten Farbbildmonitoren ausgeglichen werden. Für die meisten Farbbildmonitoren muss der Faktor γ dabei im Wertebereich von 0,3 bis 0,5, insbesondere ungefähr 0,45, gewählt werden.

Um die Beleuchtungsquelle bei Einsatz entsprechender Kamerasysteme nicht auf eine Normlichtquelle kalibrieren zu müssen, kann erfindungsgemäß ein weiterer Korrekturschritt durchgeführt werden. In diesem Korrekturschritt werden die Koeffizienten der Ausgangssignalvektoren derart umgerechnet, dass das Ergebnis den Ausgangssignalvektoren entspricht, die bei Ausleuchtung des Beobachtungsbereichs mit einem Normlicht erhalten würden.

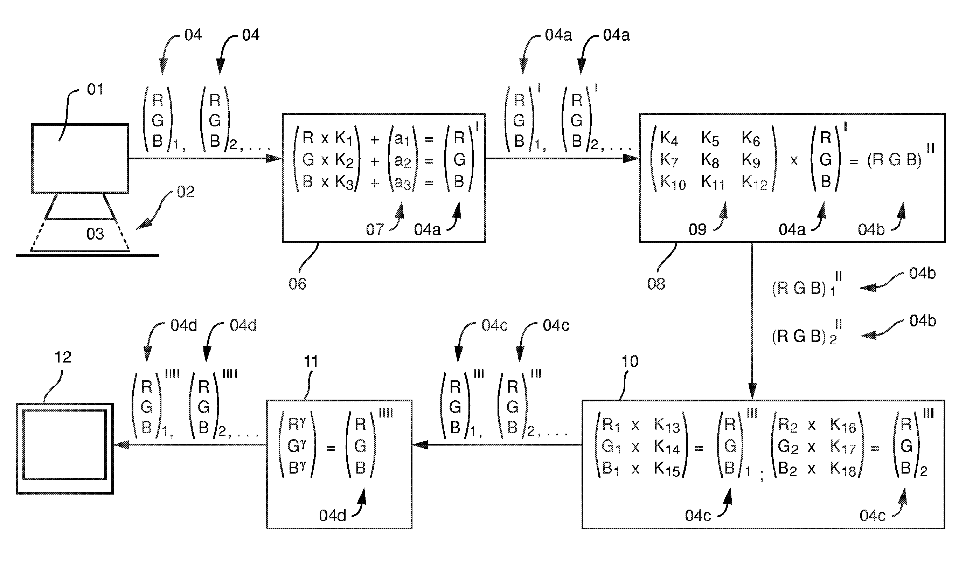

Ein Ausführungsbeispiel der Erfindung ist in der Zeichnung dargestellt und wird im folgenden näher beschrieben.

Die einzige Zeichnung zeigt die verschiedenen Verfahrensschritte bei der Durchführung einer Ausführungsform des erfindungsgemäßen Verfahrens.

Mit einer in der Art einer CCD-Kamera ausgebildeten Farbkamera 01 wird ein im Beobachtungsbereich 02 angeordnetes, farbig bedrucktes Druckerzeugnis 03 aufgenommen. In der Farbkamera 01 ist ein CCD-Chip vorgesehen, der die Bildinformationen im Beobachtungsbereich 02 in elektronische Bilddaten umsetzt. Bei dieser Umsetzung wird von jedem lichtempfindlichen Pixel des CCD-Chips ein Ausgangssignalvektor 04 generiert. Entsprechend der Anzahl der Pixel auf dem CCD-Chip werden von der Farbkamera 01 entsprechend viele Ausgangssignalvektoren 04 zur Weiterverarbeitung zur Verfügung gestellt.

Jeder Ausgangssignalvektor 04 wird von drei Koeffizienten R, G und B gebildet. Die Koeffizienten R, G und B entsprechen den Farbwerten für die drei Farbkanäle rot, grün und blau, wobei die Farbe des Druckerzeugnisses 03 an der Position im Beobachtungsbereich, die vom entsprechenden Pixel aufgenommen wurde, der Mischung aus den drei Farbkanälen rot, grün und blau entspricht.

Die Ausgangssignalvektoren 04, deren Index der Anordnung des jeweiligen Pixels auf dem CCD-Chip entspricht, werden als Rohdaten in einem ersten Korrekturmodul 06 zur Anpassung der Farbbalance der Helligkeit und des Kontrastes weiter verarbeitet. Dazu werden die Koeffizienten R, G, B des Ausgangssignalvektors 04 alle mit den farbkanalabhängigen Korrekturfaktoren K₁, K₂ und K₃ multipliziert und zu dem daraus resultierenden Ergebnisvektor ein Korrekturvektor 07 mit den Festwertkoeffizienten a₁, a₂ und a₃ addiert. Durch diese Rechenoperation werden die korrigierten Ausgangssignalvektoren 04a erzeugt, die die Farbbalance, die Helligkeit und den Kontrast der Bilddaten verbessern. Dieses Ziel wird dadurch erreicht, dass die farbkanalabhängigen Korrekturfaktoren K₁, K₂ und K₃ sowie die Koeffizienten a₁, a₂ und a₃ des Korrekturvektors 07 derart gewählt sind, dass bei Aufnahme der Referenzgrauwerte Schwarz und Weiß die dabei von der Farbkamera (01) erzeugten Ausgangssignalvektoren 04 derart transformiert werden, dass die erhaltenen korrigierten Ausgangssignalvektoren 04a solchen Sollwerten entsprechen, wie sie sich aus der Umrechnung der bekannten CIELAB-Farbwerte in Sollvektoren ergibt.

Anschließend werden die korrigierten Ausgangssignalvektoren 04a an ein zweites Korrekturmodul 08 weitergeleitet. Im Korrekturmodul 08 wird jeder Ausgangssignalvektor 04a mit einer 3x3 Korrekturmatrix 09 multipliziert und daraus die korrigierten Ausgangssignalvektoren 04b errechnet. Die Koeffizienten K₄ bis K₁₂ der Korrekturmatrix 09 wurden dabei zuvor in einem geeigneten Iterationsprozess derart ermittelt, dass die in den Ausgangssignalvektoren 04a enthaltenen Bildinformationen an das Farbempfinden des menschlichen Auges angenähert werden können.

Anschließend werden die korrigierten Ausgangssignalvektoren 04b an ein drittes Korrekturmodul 10 weitergeleitet. Im dritten Korrekturmodul 10 sind in einer Datenbank zu jedem Pixel farbkanalabhängige Korrekturfaktoren gespeichert, die zur Anpassung der von der Position der jeweiligen Pixel abhängigen Intensitätswerte mit den Koeffizienten R, G und B multipliziert werden. Im Ergebnis wird also der korrigierte Ausgangssignalvektor 04b des ersten Pixels mit den Korrekturfaktoren K₁₃, K₁₄ und K₁₅ multipliziert, um daraus für den ersten Pixel einen korrigierten Ausgangssignalvektor 04c zu errechnen. Die Korrektur der korrigierten Ausgangssignalvektoren 04b erfolgt dabei pixelweise. Die Anzahl der pixelspezifischen Korrekturfaktoren entspricht deshalb dem dreifachen der Anzahl der Pixel.

Die korrigierten Ausgangssignalvektoren 04c werden dann an ein viertes Korrekturmodul 11 weitergeleitet. Im vierten Korrekturmodul 11 werden die Koeffizienten R, G, B der korrigierten Ausgangssignalvektoren 04c mit einem Faktor γ potenziert und daraus die korrigierten Ausgangssignalvektoren 04d errechnet. Durch die Potenzierung mit dem Faktor γ wird die nichtlineare Helligkeitsübertragungsfunktion eines Monitors 12 berücksichtigt, an den die korrigierten Ausgangssignalvektoren 04d zur Bildschirmanzeige übertragen werden.

Im Ergebnis wird durch die Korrektur der Ausgangssignalvektoren 04 in den Korrekturmodulen 06, 08, 10 und 11 erreicht, dass die am Bildschirm des Farbbildmonitors 12 angezeigten Farbbilder dem Farbempfinden des menschlichen Auges so angepasst sind, so dass der Seheindruck bei Betrachtung der Anzeige am Farbbildmonitor 12 gut dem Farbempfinden entspricht, das bei unmittelbarer Betrachtung des Druckerzeugnisses 03 entstehen würde.

### Bezugszeichenliste

- 01: Farbkamera
- 02: Beobachtungsbereich
- 03: Druckerzeugnis
- 04: Ausgangssignalvektor
- 04a: korrigierter Ausgangssignalvektor (erster Korrekturschritt)
- 04b: korrigierter Ausgangssignalvektor (zweite Korrekturschritt)
- 04c: korrigierter Ausgangssignalvektor (dritte Korrekturschritt)
- 04d: korrigierter Ausgangssignalvektor (vierte Korrekturschritt)
- 05: -
- 06: erstes Korrekturmodul
- 07: Korrekturvektor
- 08: zweites Korrekturmodul
- 09: Korrekturmatrix
- 10: drittes Korrekturmodul
- 11: viertes Korrekturmodul
- 12: Farbbildmonitor
- R, G, B: Farbkanalkoeffizienten (Ausgangssignalvektor)
- K₁, K₂, K₃: farbkanalabhängigen Korrekturfaktoren
- K₄ bis K₁₂: Koeffizienten der Korrekturmatrix
- K₁₃, K₁₄, K₁₅: farbkanalabhängige Korrekturfaktoren des ersten Pixels
- K₁₆, K₁₇, K₁₈: farbkanalabhängige Korrekturfaktoren des zweiten Pixels
- a₁, a₂, a₃: Festwertkoeffizient des Korrekturvektors 07
- γ: Potenzierungsfaktor

## Patentansprüche

1. Verfahren zur Korrektur der Bilddaten eines, insbesondere zur Inspektion von farbigen Druckerzeugnissen (03) geeigneten, Kamerasystems mit einer Farbkamera (01), die entsprechend der aufgenommen Farben drei Ausgangssignale für drei getrennte Farbkanäle in der Form von Ausgangssignalvektoren (04a) liefert, wobei die Ausgangssignalvektoren (04a), deren Koeffizienten (R, G, B) die von der Farbkamera (01) gelieferten Ausgangssignale für die drei Farbkanäle an einer bestimmten Position im Beobachtungsbereich (02) repräsentieren, mit einer, insbesondere quadratischen, Korrekturmatrix (09) multipliziert werden, wobei die Ausgangssignalvektoren zusätzlich zur Korrektur mit der Korrekturmatrix (09) in einem weiteren Korrekturschritt zur Anpassung der Farbbalance, der Helligkeit und des Kontrastes verändert werden und die Koeffizienten des Korrekturvektors (07) und die drei farbkanalabhängigen Korrekturfaktoren (K₁, K₂, K₃) experimentell **dadurch** ermittelt werden, dass eine Referenzfarbtafel vorgegeben wird, auf der in mehren Farbfeldern unterschiedliche Referenzfarben dargestellt sind, für jedes Farbfeld der Referenzfarbtafel ein Sollvektor vorgegeben wird, der entsprechend der jeweiligen Referenzfarbe geeignete Sollausgangssignale für die drei Farbkanäle repräsentiert, die Referenzfarbtafel mit der Farbkamera (01) aufgenommen wird, wobei für jedes Farbfeld ein Ausgangssignalvektor (04) ermittelt wird, der Korrekturvektor (07) und die drei Korrekturfaktoren (K₁, K_{2,} K₃) derart gewählt werden, dass die korrigierten Ausgangssignalvektoren (04a) für die beiden Farbfelder mit den Referenzgrauwerte Schwarz und Weiß, die durch entsprechende Addition mit dem Korrekturvektor (07) und Multiplikation mit den farbkanalabhängigen Korrekturfaktoren (K₁, K_{2,} K₃) erhaltenen werden, im wesentlichen exakt den für diese beiden Farbfelder vorgegebenen Sollvektoren übereinstimmen.

2. Verfahren nach Anspruch 1, **dadurch gekennzeichnet, dass** die erhaltenen korrigierten Ausgangssignalvektoren (04b) anschließend im Kamerasystem weiterverarbeitet werden.

3. Verfahren nach Anspruch 1, **dadurch gekennzeichnet, dass** die Koeffizienten (K₄ bis K₁₂) der Korrekturmatrix (09) in einem iterativen Näherungsalgorithmus ermittelt werden, bei dem eine Referenzfarbtafel vorgegeben wird, auf der in mehreren Farbfeldern unterschiedliche Referenzfarben dargestellt sind, für jedes Farbfeld der Referenzfarbtafel ein Sollvektor vorgegeben wird, der entsprechend der jeweiligen Referenzfarbe geeignete Sollausgangssignale für die drei Farbkanäle repräsentiert, die Referenzfarbtafel mit der Farbkamera (01) aufgenommen wird, wobei für jedes Farbfeld ein Ausgangssignalvektor (04) ermittelt wird, in einem ersten Iterationsschritt die Ausgangssignalvektoren (04) für alle Farbfelder mit einer Korrekturmatrix (09), deren Koeffizienten als Ausgangswerte der Iteration vorgegeben sind, multipliziert werden, die Koeffizienten der Korrekturmatrix (09) in jedem folgenden Iterationsschritt derart verändert werden, dass die korrigierte Ausgangssignalvektoren iterativ an die vorgegebenen Sollvektoren angenähert werden.

4. Verfahren nach Anspruch 3, **dadurch gekennzeichnet, dass** die Annäherung der korrigierten Ausgangssignalvektoren an die vorgegebenen Sollvektoren für jeden Iterationsschritt **dadurch** bewertet wird, dass für jedes Farbfeld der Referenzfarbtafel der Differenzwert zwischen korrigiertem Ausgangssignalvektor und vorgegebenen Sollvektor ermittelt und die Summe aller Differenzwerte aufaddiert wird, wobei die Änderung der Koeffizienten der Korrekturmatrix (09) im letzten Iterationsschritt nur dann für den nächsten Iterationsschritt angenommen wird, wenn die Summe aller Differenzwerte im letzten Iterationsschritt im Vergleich zur Summe aller Differenzwerte im vorletzten Iterationsschritt kleiner geworden ist.

5. Verfahren nach einem der Ansprüche 3 oder 4, **dadurch gekennzeichnet, dass** die Ausgangssignalvektoren zusätzlich zur Korrektur mit der Korrekturmatrix (09) in einem weiteren Korrekturschritt zur Anpassung der Farbbalance, d. h. der richtigen Gewichtung der drei Farbkanäle zueinander, der Helligkeit und des Kontrastes verändert werden.

6. Verfahren nach Anspruch 1, **dadurch gekennzeichnet, dass** zu jedem Ausgangssignalvektor (04) ein Korrekturvektor (07) addiert wird und dass die Koeffizienten (R, G, B) jedes Ausgangssignalvektors (04) mit drei farbkanalabhängigen Korrekturfaktoren (K₁, K₂, K₃) multipliziert werden.

7. Verfahren nach Anspruch 5 oder 6, **dadurch gekennzeichnet, dass** der Korrekturschritt zur Anpassung der Farbbalance, der Helligkeit und des Kontrastes vor der Multiplikation mit der Korrekturmatrix durchgeführt wird.

8. Verfahren nach einem der Ansprüche 1 bis 7, **dadurch gekennzeichnet, dass** die Bildkamera (01) in der Art einer CCD-Farbkamera mit einer Vielzahl von flächig oder zeilenförmig angeordneten Pixel ausgebildet ist, die pixelweise Ausgangssignalvektoren (04), deren Koeffizienten (R, G, B) jeweils die drei Ausgangssignale für die drei Farbkanäle in jedem Pixel repräsentieren, liefert.

9. Verfahren nach Anspruch 1, **dadurch gekennzeichnet, dass** die Ausgangssignalvektoren (04b) zusätzlich zur Korrektur mit der Korrekturmatrix (09) in einem weiteren Korrekturschritt zur Anpassung der Intensitätswerte verändert werden.

10. Verfahren nach Anspruch 1, **dadurch gekennzeichnet, dass** die für jeden Pixel ermittelten Koeffizienten (R, G, B) der korrigierten oder unkorrigierten Ausgangssignalvektoren (04b) jeweils mit für jeden Pixel spezifisch vorgegebenen, farbkanalabhängigen Korrekturfaktoren (K₁₃, K₁₄, K_{15;} K₁₆, K₁₇, K₁₈) multipliziert werden.

11. Verfahren nach Anspruch 7, 8, 9 oder 10, **dadurch gekennzeichnet, dass** die pixelspezifischen, farbkanalabhängigen Korrekturfaktoren (K₁₃, K₁₄, K_{15;} K₁₆, K₁₇, K₁₈) experimentell **dadurch** ermittelt werden, dass der Beobachtungsbereich der CCD-Farbkamera (01) mit einem homogenen farbigen Material, insbesondere homogen weißen Material, ausgelegt wird, die CCD-Farbkamera (01) ausgelöst und **dadurch** für jeden Pixel ein Ausgangssignalvektor ermittelt wird, der Ausgangssignalvektor bestimmt wird, der die hellste Stelle im Beobachtungsbereich repräsentiert, für jeden Pixel die pixelspezifischen, farbkanalabhängigen Korrekturfaktoren (K₁₃, K₁₄, K_{15;} K₁₆, K₁₇, K₁₈) derart gewählt werden, dass das Ergebnis der Multiplikation dieser Korrekturfaktoren (K₁₃, K_{14,} K_{15;} K₁₆, K_{17,} K₁₈) mit den Koeffizienten der jeweils entsprechenden Ausgangssignalvektoren mit den Koeffizienten des Ausgangssignalvektors an der hellste Stelle im Beobachtungsbereich übereinstimmt.

12. Verfahren nach Anspruch 11, **dadurch gekennzeichnet, dass** die Beleuchtungsverhältnisse im Beobachtungsbereich (02) bei der experimentellen Bestimmung der pixelspezifischen farbkanalabhängigen Korrekturfaktoren (K₁₃, K₁₄, K_{15;} K₁₆, K₁₇, K₁₈) der Beleuchtung beim Einsatz des Kamerasystems entspricht.

13. Verfahren nach einem der Ansprüche 9 bis 12, **dadurch gekennzeichnet, dass** der Korrekturschritt zur Anpassung der Intensitätswerte nach der Multiplikation mit der Korrekturmatrix (09) durchgeführt wird.

14. Verfahren nach einem der Ansprüche 1 bis 13, **dadurch gekennzeichnet, dass** die korrigierten Ausgangssignalvektoren (04d) zur Ansteuerung drei getrennter Farbkanäle eines Farbbildmonitors (12) eingesetzt werden.

15. Verfahren nach Anspruch 14, **dadurch gekennzeichnet, dass** vor der Übertragung an den Farbbildmonitor (12) die Koeffizienten (R, G, B) der korrigierten Ausgangssignalvektoren (04c) als Basis jeweils mit einem Faktor γ in die Potenz gesetzt werden.

16. Verfahren nach Anspruch 15, **dadurch gekennzeichnet, dass** der Faktor γ einen Wert im Bereich von 0,3 bis 0,5, insbesondere ungefähr 0,45, aufweist.

17. Verfahren nach einem der Ansprüche 1 bis 16, **dadurch gekennzeichnet, dass** die Ausgangssignalvektoren zusätzlich zur Korrektur mit der Korrekturmatrix (09) in einem weiteren Korrekturschritt zur Anpassung der Beleuchtungsverhältnisse noch derart verändert werden, dass die Koeffizienten der korrigierten Ausgangssignalvektoren dem Ergebnis entsprechen, das bei Ausleuchtung des Beobachtungsbereichs mit Normlicht erhalten wird.

18. Verfahren nach einem der Ansprüche 1 bis 17, **dadurch gekennzeichnet, dass** die Referenzfarbtafel in der Art eines IT8-Charts mit insgesamt 288 Farbfeldern ausgebildet ist.

19. Verfahren nach einem der Ansprüche 1 bis 18, **dadurch gekennzeichnet, dass** die Sollvektoren durch Umrechnung der für die Farbfelder der Referenzfarbtafel bekannten CIELAB-Farbwerte in entsprechende Koeffizienten für die drei Farbkanäle vorgegeben werden.
